# EUROPEAN PATENT APPLICATION

(11) **EP 4 847 995 A1**
(43) Date of publication of application: **02.12.2026**
(21) Application number: 25745054.4
(22) Date of filing: 21.01.2025
(51) Int. Cl.: G03B 21/14, F21S 2/00, F21V 5/02, F21V 8/00, G03B 21/00, H04N 5/74, F21Y 115/30

(54) **LIGHT SOURCE DEVICE AND PROJECTION-TYPE VIDEO DISPLAY DEVICE**

(30) Priority: 22.01.2024 JP 2024007531
(71) Applicant: Panasonic Projector & Display Corporation, Kadoma-shi, Osaka 571-8503 (JP)
(72) Inventor: YAMAGATA, Yuki, kadoma-shi, Osaka 571-0057 (JP); YAMAGISHI, Shigekazu, kadoma-shi, Osaka 571-0057 (JP)
(74) Representative: Eisenführ Speiser
(86) International application number: PCT/JP2025/001709
(87) International publication number: WO 2025/159070

(57) **Abstract**

A light source device includes a first light source unit, a second light source unit, and a light guide optical system. The first light source unit includes a first light source element array configured to emit first laser light. The second light source unit includes at least two second light source element arrays configured to emit second laser light. The first light source element array is positioned between adjacent second light source element arrays in a first direction. The light guide optical system is disposed opposite the first light source element array and extends across the first and second light source units. The light guide optical system includes first and second parallel reflection surfaces configured to reflect the first laser light and emit the reflected first laser light so as to overlap the second laser light as viewed in a second direction orthogonal to the first direction.

## Description

### TECHNICAL FIELD

The present disclosure relates to a light source device and a projection type image display device. More specifically, the present disclosure relates to a light source device that collects and outputs emitted light of a plurality of laser light sources with high density, and a projection type image display device including such a light source device.

### BACKGROUND

Conventionally, with an increase in output of a projection type image display device, there has been known an illumination device that emits illumination light having high luminance by collecting light emitted from a plurality of light sources such as an LED or a laser element with high density.

For example, WO 2018/211886 A and JP 2022-53290 A disclose illumination devices.

WO 2018/211886 A proposes a light source optical system that collects light emitted from a plurality of laser light sources configured by a plurality of laser elements by a composite mirror provided with a plurality of reflection regions and a plurality of transmission regions. However, in the light source optical system of WO 2018/211886 A, the composite mirror is disposed obliquely with respect to the laser light source. Since invalid regions generated during the coating process are present in the vicinity of the plurality of reflective regions and the plurality of transmissive regions formed on the composite mirror, the plurality of laser elements included in the laser light source are arranged at predetermined intervals from each other. This limits the collection of light emitted from the laser light source.

JP 2022-53290 A proposes an illumination device that causes light emitted from a plurality of light source units configured by laser light source elements arranged in an array to approach each other using a prism or a mirror and outputs the light. However, in the illumination device of JP 2022-53290 A, since the array pitch of the laser light source elements is still left in each light source unit, the light emitted from the laser light source elements does not collect with high density.

Therefore, there is still room for improvement in the configuration of the conventional light source device in that emitted light of a plurality of laser light sources is collected with high density to realize high-luminance irradiation.

### SUMMARY

Therefore, an object of the present disclosure is to provide a light source device including a plurality of light source units each including a light source element array in which a plurality of laser light source elements is arranged, the light source device being configured to collect emitted light from each light source element array with high density.

In order to address the issue described above, the present disclosure provides a light source device. A light source device according to one aspect of the present disclosure includes: a first light source unit including a first light source element array formed by a plurality of light source elements arranged in a first direction and configured to emit first laser light; a second light source unit including a second light source element array formed by a plurality of light source elements arranged in the first direction, spaced apart from the first light source unit in the first direction, and configured to emit second laser light; and a light guide optical system disposed opposite the first light source element array and extending across the first light source unit and the second light source unit. The second light source unit includes at least two second light source element arrays spaced apart from each other in a second direction orthogonal to the first direction, the first light source element array is arranged between two adjacent ones of the second light source element arrays as viewed in the first direction, the first laser light and the second laser light are emitted in a third direction substantially orthogonal to the first direction and the second direction, and the light guide optical system includes: a first reflection surface configured to reflect the incident first laser light toward the second light source unit in the first direction; and a second reflection surface parallel to the first reflection surface, the second reflection surface being configured to further reflect the first laser light reflected by the first reflection surface and emit the first laser light such that the first laser light overlaps the second laser light as viewed in the second direction.

With the light source device according to one aspect of the present disclosure, in a light source device including a plurality of light source units each including a light source element array in which a plurality of laser light source elements is arranged, it is possible to collect emitted light from each light source element array with high density.

### BRIEF DESCRIPTION OF DRAWINGS

Fig. 1 is a schematic configuration diagram of a projection-type image display device according to a first embodiment of the present disclosure;
Fig. 2 is a schematic configuration diagram of an illumination device of the projection-type image display device of Fig. 1;
Fig. 3A is a perspective view of a light source device according to the first embodiment;
Fig. 3B is a perspective view illustrating a configuration of the light source device of Fig. 3A excluding a prism element;
Fig. 3C is a top view of the light source device of Fig. 3A;
Fig. 4 is a perspective view of a light source unit of the light source device according to the first embodiment;
Fig. 5 is a plan view illustrating a configuration of the light source unit in the light source device of the first embodiment;
Fig. 6 is a top view illustrating arrangement of light source elements in the light source device of the first embodiment;
Fig. 7A is a side view illustrating an optical path of emitted light of the light source device of the first embodiment;
Fig. 7B is another side view illustrating the optical path of the emitted light of the light source device of the first embodiment;
Fig. 8 is a top view illustrating arrangement of emitted light of the light source device of the first embodiment;
Fig. 9 is a perspective view of a light source unit of a light source device according to a second embodiment;
Fig. 10 is a plan view illustrating a configuration of a light source unit of the light source device according to the second embodiment;
Fig. 11 is a top view illustrating arrangement of light source elements in the light source device according to the second embodiment;
Fig. 12 is a top view illustrating arrangement of emitted light of the light source device of the second embodiment;
Fig. 13 is a perspective view of a light source module of a third embodiment;
Fig. 14A is a side view of the light source module of the third embodiment;
Fig. 14B is another side view of the light source module of the third embodiment;
Fig. 14C is a top view of the light source module of the third embodiment;
Fig. 15 is a side view illustrating an optical path of emitted light of the light source module of the third embodiment;
Fig. 16 is a top view illustrating arrangement of emitted light of the light source module of the third embodiment;
Fig. 17 is a top view of a light source assembly of a fourth embodiment;
Fig. 18 is a top view illustrating arrangement of light source elements in the light source assembly of the fourth embodiment; and
Fig. 19 is a top view illustrating arrangement of emitted light of the light source assembly of the fourth embodiment.

### DETAILED DESCRIPTION

A light source device according to one aspect of the present disclosure includes: a first light source unit including a first light source element array formed by a plurality of light source elements arranged in a first direction and configured to emit first laser light; a second light source unit including a second light source element array formed by a plurality of light source elements arranged in the first direction, spaced apart from the first light source unit in the first direction, and configured to emit second laser light; and a light guide optical system disposed opposite the first light source element array and extending across the first light source unit and the second light source unit. The second light source unit includes at least two second light source element arrays spaced apart from each other in a second direction orthogonal to the first direction, the first light source element array is arranged between two adjacent ones of the second light source element arrays as viewed in the first direction, the first laser light and the second laser light are emitted in a third direction substantially orthogonal to the first direction and the second direction, and the light guide optical system includes: a first reflection surface configured to reflect the incident first laser light toward the second light source unit in the first direction; and a second reflection surface parallel to the first reflection surface, the second reflection surface being configured to further reflect the first laser light reflected by the first reflection surface and emit the first laser light such that the first laser light overlaps the second laser light as viewed in the second direction.

According to this aspect, in a light source device including a plurality of light source units each including a light source element array in which a plurality of laser light source elements is arranged, it is possible to collect emitted light from each light source element array with high density.

In addition, in a light source device according to another aspect of the present disclosure, the light guide optical system includes a prism element, and the prism element includes: a first prism surface on which the first laser light is incident; a second prism surface that is the first reflection surface; and a third prism surface that is the second reflection surface.

In addition, in a light source device according to another aspect of the present disclosure, the first light source unit includes: at least two of the first light source element arrays spaced apart from each other in the second direction; and at least two of the prism elements each disposed opposite a respective one of the first light source element arrays and extending across the first light source unit and the second light source unit. The first light source element array and the second light source element array are arranged alternately as viewed in the first direction, each of the prism elements has a pair of fourth prism surfaces extending along the first direction and being parallel to the third direction, and the second laser light is emitted through a space between mutually facing fourth prism surfaces of adjacent prism elements.

In addition, in a light source device according to another aspect of the present disclosure, a width between the pair of fourth prism surfaces of each of the prism elements is substantially equal to a distance between adjacent side ends of adjacent second light source element arrays.

In addition, in a light source device according to another aspect of the present disclosure, the light source elements of the first light source element array include a semiconductor laser element and a collimating lens provided for the semiconductor laser element, and the collimating lens has a lens width substantially equal to a width between the pair of fourth prism surfaces in the second direction.

In addition, in a light source device according to another aspect of the present disclosure, a distance between the first prism surface and the collimating lens is not greater than three times the lens width.

In addition, a light source device according to another aspect of the present disclosure further includes a support member configured to support the prism element. the support member abuts on the first prism surface at a position between the first light source unit and the second light source unit.

In addition, a light source module according to another aspect of the present disclosure includes: a first light source device according to an aspect of the present disclosure, the first light source device being configured to emit first irradiation light; a second light source device according to an aspect of the present disclosure, the second light source device being configured to emit second irradiation light, the first light source device and the second light source device being spaced apart from each other by a first distance in the first direction; and an additional light guide optical system extending across the first light source device and the second light source device. The additional light guide optical system includes: a third reflection surface configured to reflect the incident second irradiation light toward the first light source device in the first direction; and a fourth reflection surface parallel to the third reflection surface, the fourth reflection surface being configured to further reflect the second irradiation light reflected by the third reflection surface and emit the second irradiation light such that, in the first direction, the second irradiation light is spaced apart from the first irradiation light by a second distance smaller than the first distance.

In addition, in a light source module according to another aspect of the present disclosure, the additional light guide optical system includes a prism, and the prism includes: a fifth prism surface on which the second irradiation light is incident; a sixth prism surface that is the third reflection surface; and a seventh prism surface that is the fourth reflection surface.

In addition, a light source assembly according to another aspect of the present disclosure includes: a first light source device according to an aspect of the present disclosure, the first light source device being configured to emit first irradiation light; a third light source unit including a third light source element array formed by a plurality of light source elements arranged in the second direction and configured to emit third laser light in the third direction; and an additional light guide optical system disposed opposite the third light source element array and extending across the third light source unit and the first light source device. The third light source element array is spaced away from the second light source element array as viewed in the first direction, the third light source element array not intersecting the second light source element array as viewed in the second direction, and the additional light guide optical system includes: a fifth reflection surface configured to reflect the incident third laser light toward the first light source device in the second direction; and a sixth reflection surface parallel to the fifth reflection surface, the sixth reflection surface being configured to further reflect the third laser light reflected by the fifth reflection surface and emit the third laser light such that the third laser light overlaps the first irradiation light as viewed in the first direction.

In addition, in a light source assembly according to another aspect of the present disclosure, the additional light guide optical system includes a prism, and the prism includes: an eighth prism surface on which the third laser light is incident; a ninth prism surface that is the fifth reflection surface; and a tenth prism surface that is the sixth reflection surface.

In addition, an illumination device according to another aspect of the present disclosure includes at least one of the light source devices according to an aspect of the present disclosure.

In addition, a projection type image display device according to another aspect of the present disclosure includes: the illumination device according to an aspect of the present disclosure; an image display element configured to modulate illumination light emitted from the illumination device and emit the modulated illumination light as projection light; and a projection optical system configured to enlarge and project the projection light to display an image.

Any combination of the above-described embodiments may be employed as appropriate, thereby achieving the respective advantages and effects thereof.

Embodiments will be described in detail below with reference to the drawings as appropriate. However, unnecessarily detailed description may be omitted. For example, detailed description of already well-known matters and overlapping description for substantially the same configuration may be omitted. This is to avoid the following description from becoming unnecessarily redundant and to facilitate understanding by those skilled in the art.

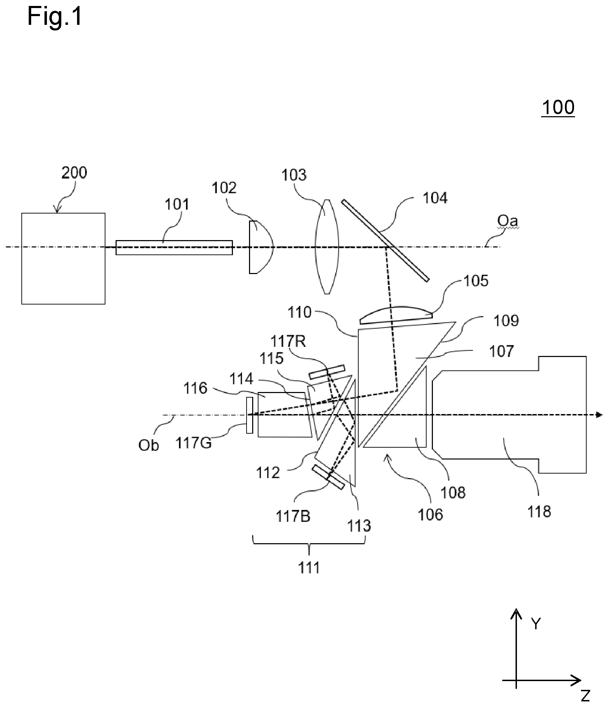

Hereinafter, a light source device, and an illumination device and a projection type image display device including the light source device according to an embodiment of the present disclosure will be described with reference to Figs. 1 to 19. The accompanying drawings and the following description are provided for those skilled in the art to fully understand the present disclosure, and are not intended to limit the subject matter described in the claims. In addition, in each drawing, each element is exaggerated in order to facilitate the description.

### (First Embodiment)

### <Projection Type Image Display Device>

Fig. 1 is a schematic configuration diagram of a projection-type image display device 100 according to the first embodiment of the present disclosure.

As shown in Fig. 1, the projection-type image display device 100 according to the first embodiment is a so-called DLP projector, and at least a portion of illumination light from an illumination device 200 is modulated by DMDs (Digital Micromirror Devices) 117R, 117G, and 117B serving as image display elements, and is emitted as projection light. A projection optical system 118 enlarges and projects the emitted projection light to display an image.

The configuration of the illumination device 200 will be described in detail later. The illumination light from the illumination device 200 is condensed on a rod integrator 101, and emitted light from a rod integrator 101 is reflected by a mirror 104 through relay lenses 102 and 103, and then is incident on a total reflection prism unit 106 through a field lens 105.

In the total reflection prism unit 106, a first prism 107 and a second prism 108 are fixed while a slight gap (air gap) is maintained. The light incident on the total reflection prism unit 106 is totally reflected by a prism surface 109, passes through a prism surface 110, and is incident on a color prism unit 111.

The color prism unit 111 includes a first prism 113, a second prism 115, and a third prism 116, a gap (air gap) is provided between the first prism 113 and the second prism 115, and the second prism 115 and the third prism 116 are bonded and fixed.

Among the light incident on the first prism 113 from the total reflection prism unit 106, the red light and the green light are transmitted, and the blue light is reflected by the dichroic mirror surface 112 having a characteristic of reflecting the blue light, thereby changing its traveling direction. The blue light then travels toward the total reflection prism unit 106, and is re-incident on the incident surface of the first prism 113 with a large incident angle. The blue light is totally reflected by the first prism 113, and is incident on a DMD 117B for blue light modulation.

Subsequently, the red light among the red light and the green light having passed through the air gap between the first prism 113 and the second prism 115 is reflected by the dichroic mirror surface 114 that reflects the red light and has spectral characteristics passing through the green light, and changes its traveling direction toward the first prism 113. The red light having changed the traveling direction of the light is totally reflected by the air gap between first prism 113 and second prism 115, and is incident on a DMD 117R for red light modulation.

The green light out among the red light and the green light having passed through the air gap between the first prism 113 and the second prism 115 further passes through the dichroic mirror surface 114, travels to the third prism 116 as it is, passes through the third prism 116, and then is incident on a DMD 117G for green light modulation.

Each of the DMDs 117R, 117G, and 117B is a device including a plurality of micromirrors arranged in a matrix, wherein the inclination angle of each micromirror is selectively changeable between two states. The tilt angles of the micromirrors are controlled in two directions based on an external image signal. For example, the micromirrors are selectively inclined at a first inclination angle at which the reflected light is incident on the color prism unit 111 at an incident angle of 0 degrees and a second inclination angle at which the reflected light is incident on the color prism unit 111 at an angle larger than 0 degrees. With such a configuration, the DMD 117R outputs at least partially modulated red light (red projection light), and the DMDs 117G and 117B similarly output green projection light and blue projection light.

The red projection light, the green projection light, and the blue projection light from the DMDs 117R, 117G, and 117B are combined by the color prism unit 111, and the combined projection light (color projection light) is emitted toward a total reflection prism 46. The color image light passes through the total reflection prism unit 106, and is enlarged and projected onto a projection target such as a screen through the projection optical system 118 including a projection lens and the like.

### <Illumination Device>

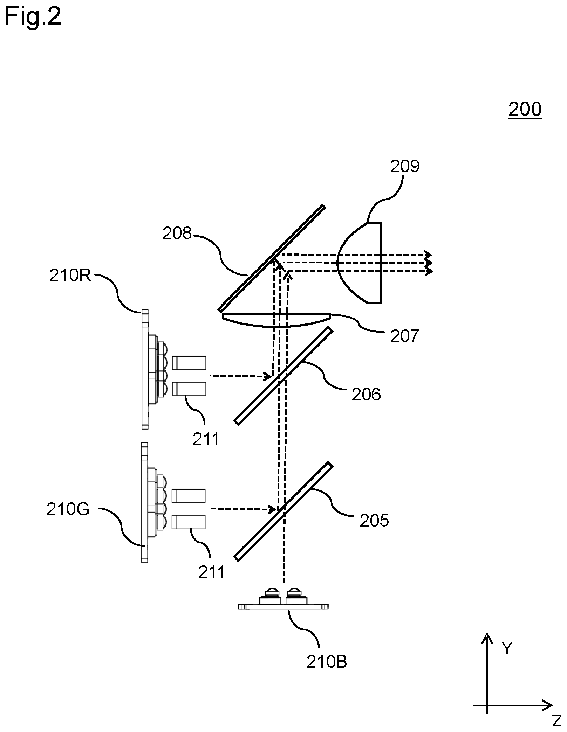

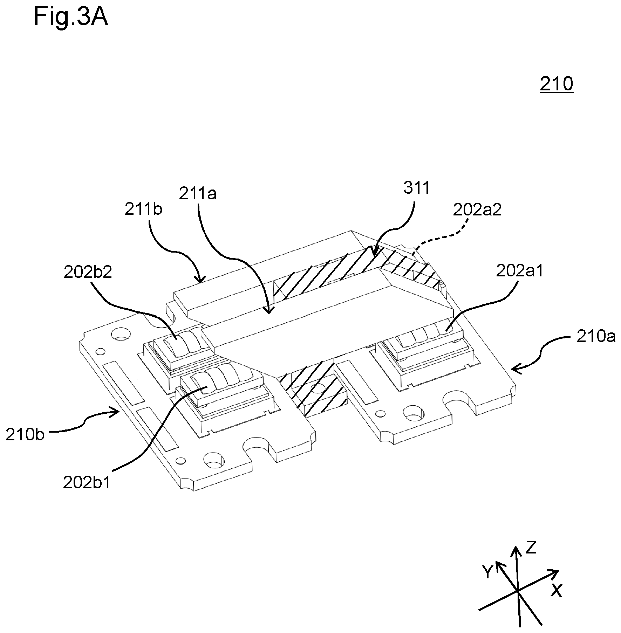

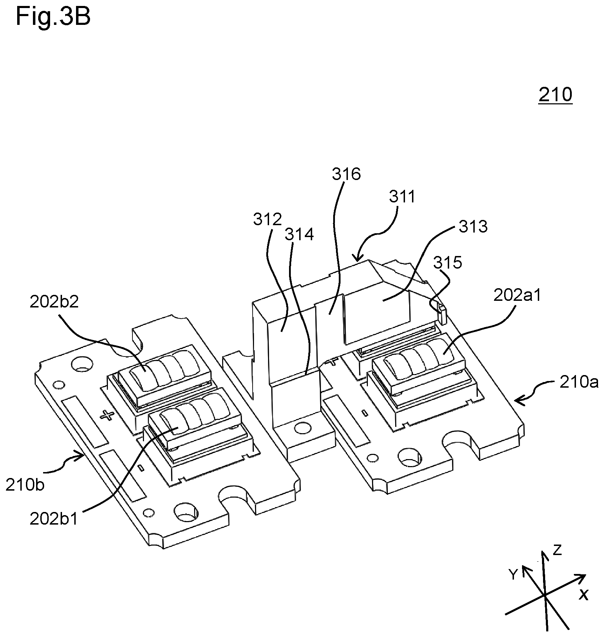

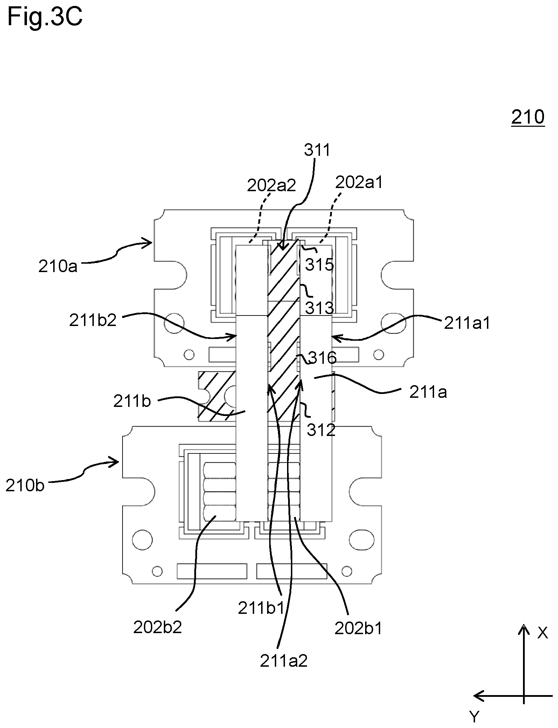

Next, a configuration of an illumination device of a projection-type image display device and a configuration of a light source device according to the first embodiment will be described with reference to Figs. 2 to 3C. Fig. 2 is a schematic configuration diagram of the illumination device 200 of the projection-type image display device 100 shown in Fig. 1. Fig. 3A is a perspective view of a light source device 210 according to the first embodiment. Fig. 3B is a perspective view illustrating the light source device 210 shown in Fig. 3A in a state in which the prism element is removed. Fig. 3C is a top view of the light source device 210 shown in Fig. 3A. The X-Y-Z orthogonal coordinate system shown in the drawings is for facilitating understanding of the present disclosure, and does not limit the present disclosure. In the present specification, the Z-axis direction indicates the irradiation direction of the light source device.

The illumination device 200 shown in Fig. 2 includes a light source device 210R that emits red light, a light source device 210G that emits green light, and a light source device 210B that emits blue light. Blue light emitted from the light source device 210B that emits blue light is incident on a dichroic mirror 205 that transmits blue light and reflects green light, and is transmitted through the dichroic mirror 205. The green light emitted from the light source device 210G that emits the green light is incident on and reflected by the dichroic mirror 205 that reflects the green light. The green light is then combined coaxially with the blue light transmitted through the dichroic mirror 205, and is subsequently incident on the dichroic mirror 206. The dichroic mirror 206 is configured to transmit the blue light and the green light and reflects the red light. Thus, the combined green light and blue light is transmitted through the dichroic mirror 206. The red light emitted from the light source device 210R that emits red light is incident on the dichroic mirror 206 that reflects the red light and is reflected. The red light is then combined coaxially with the blue light and the green light transmitted through the dichroic mirror 206 to form illumination light. The illumination light combined with the red light, the green light, and the blue light sequentially passes through a condenser lens 207, a mirror 208, and a condenser lens 209, and then exits from the illumination device 200 along the Z axis in the drawing, and is incident on the rod integrator 101 shown in Fig. 1.

In consideration of the difference in the light emission efficiency of the light source elements depending on the wavelength range of the emitted light as well as the desired color balance of the projection type image display device, in the illumination device 200 shown in Fig. 2, the light source device 210R that emits red light includes two light source units, the light source device 210G that emits green light includes two light source units, and the light source device 210B that emits blue light includes one light source unit. The light obtained by combining the emitted lights of the two light source units included in the light source devices 210R and 210G is red light and green light emitted from the light source device. The light source units included in each light source device can have substantially the same configuration.

The light source devices 210R, 210G, and 210B shown in Fig. 2 can be configured by substantially similar light source units except that wavelength ranges of emitted light are different. Therefore, hereinafter, the light source devices 210R, 210G, and 210B will be described as the light source device 210.

The light source device 210 of the first embodiment shown in Figs. 3A to 3C includes two light source units 210a and 210b having substantially the same configuration, two prism elements 211a and 211b having substantially the same configuration, and a support member 311. The prism elements 211a and 211b collect the emitted light of the light source units 210a and 210b, and the support member 311 supports the prism elements 211a and 211b.

The light source unit 210a and the light source unit 210b are arranged to be separated from each other in the X direction in the drawing. The light source unit 210a includes light source element arrays 202a1 and 202a2 in which a plurality of light source elements that emit laser light to the irradiation side in the Z direction is arranged in the X direction. Similarly, the light source unit 210b includes light source element arrays 202b1 and 202b2 in which a plurality of light source elements that emit laser light to the irradiation side in the Z direction is arranged in the X direction. The configurations of the light source units 210a and 210b will be described in detail later.

The prism elements 211a and 211b are arranged on the irradiation side, and extend in parallel to each other in the X direction across the light source unit 210a and the light source unit 210b. Furthermore, as shown in Fig. 3C, the prism elements 211a and 211b are arranged to face the light source element arrays 202a1 and 202a2, respectively. In addition, as viewed in the X direction, each of the light source element arrays 202a1 and 202a2 of the light source unit 210a is arranged alternately with a respective one of the light source element arrays 202b1 and 202b2 of the light source unit 210b.

The support member 311 is used to support the prism elements 211a and 211b, and is arranged between the prism element 211a and the prism element 211b as viewed in the Z direction in the present embodiment. As shown in Fig. 3B, the support member 311 includes surfaces 312 and 313 on the X-Z plane, a surface 314 on the X-Y plane, and a surface 315 on the Y-Z plane. The support member 311, for example, can be fixed with these surfaces in contact with the prism surfaces of the prism elements 211a and 211b including the prism surfaces 211a2 and 211b1 shown in Fig. 3C, to support the prism element. In addition, a concave portion 316 is provided between the surfaces 312 and 313 abutting on the prism so as to allow an adhesive for fixing the prism element to escape.

In the present embodiment, the surfaces 312, 313, 314, and 315 of the support member 311 that abut on the prism are positioned in regions outside the optical paths of light emitted from the light source elements of light source units 210a and 210b. Thus, the prism element can be supported without affecting the output of the light source device. The optical path of the light emitted from the light source element will be described in detail later. The configuration of the support member 311 shown in Figs. 3A to 3C is only one example, and the present disclosure is not limited thereto. The prism element can also be supported using a support member having another configuration.

### <Light Source Unit>

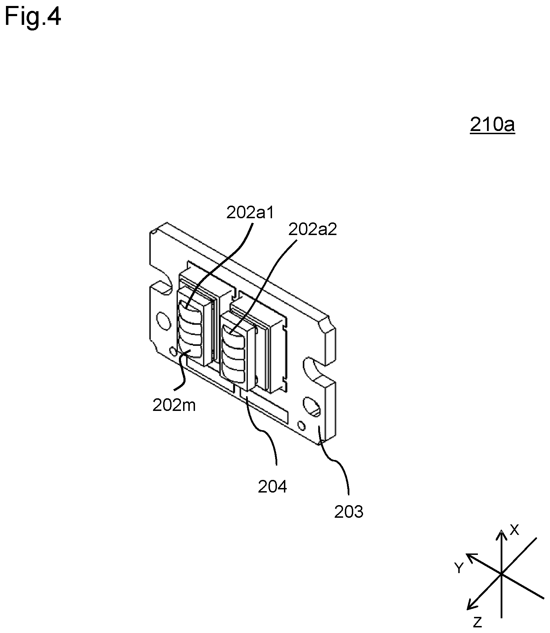

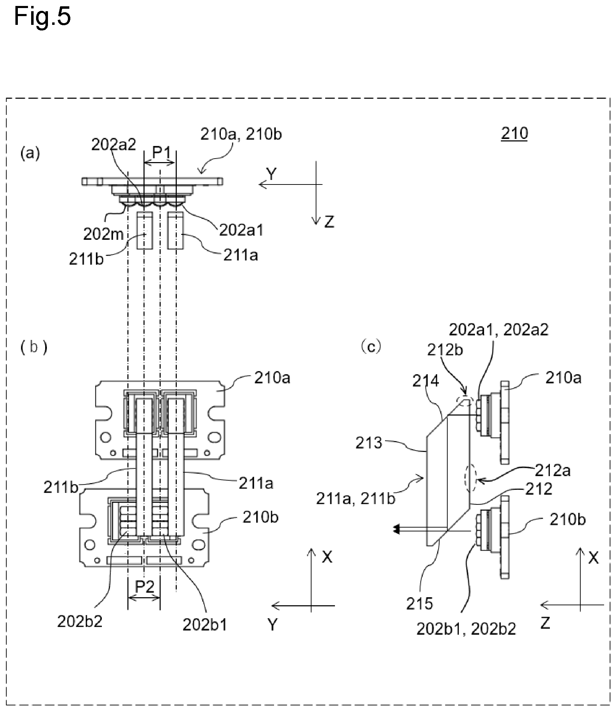

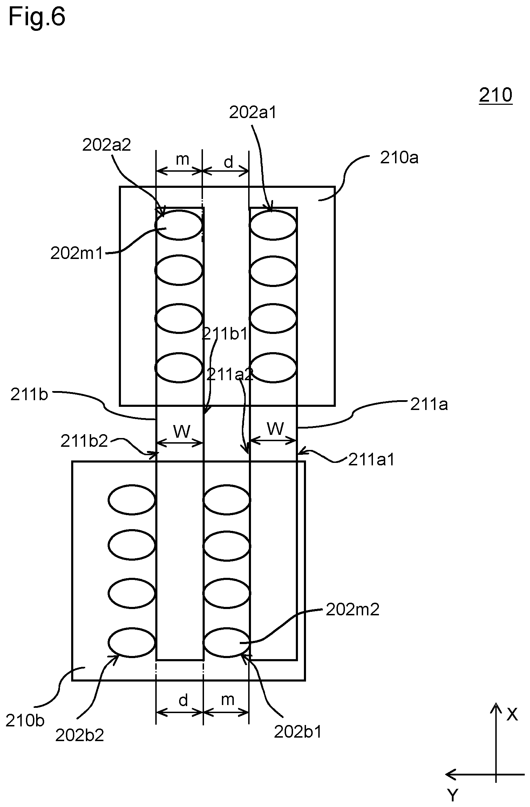

A configuration of a light source unit included in the light source device 210 according to the first embodiment will be described with reference to Figs. 4 to 6. Fig. 4 is a perspective view of the light source unit 210a of the light source device 210 according to the first embodiment. Fig. 5 is a plan view illustrating configurations of the light source units 210a and 210b in the light source device 210 of the first embodiment. Fig. 6 is a top view illustrating arrangement of light source elements in the light source device 210 of the first embodiment.

As shown in Fig. 4, the light source unit 210a includes the light source element arrays 202a1 and 202a2 arranged along the X direction, a substrate 203, and an electrode 204. Each of the light source element arrays 202a1 and 202a2 is configured by arranging a plurality of light source elements 202m that emit laser light along optical axes parallel to each other in an array. Although not limited to this, in the present embodiment, for example, the light source element arrays 202a1 and 202a2 include the same number of similar light source elements 202m, and these light source elements can be arranged in a matrix. In the present embodiment, the light source unit 210a includes eight light source elements 202m arranged in a 2×4 matrix, but the present disclosure is not limited to the number of light source elements. The light source unit or the light source element array may include any number of two or more light source elements.

The light source elements 202m each include, for example, a semiconductor laser element and a collimating lens that makes laser light from the semiconductor laser element substantially parallel light, and are mounted so as to emit laser light substantially parallel to each other. The light source element arrays 202a1 and 202a2 are disposed on the substrate 203 having excellent thermal conductivity, and are supplied with power by the electrode 204 connected to a power supply.

The light source unit 210b has substantially the same configuration as the light source unit 210a, and the light source units 210a and 210b are housed in a package excellent in thermal conductivity to constitute the light source device 210 shown in Figs. 3A to 3C.

As shown in parts (a) and (b) of Fig. 5, the light source units 210a and 210b are arranged with their substrates lying substantially on the same plane and spaced away from each other in the X direction. In addition, the light source element arrays 202a1 and 202a2 of the light source unit 210a and the light source element arrays 202b1 and 202b2 of the light source unit 210b are arranged alternately as viewed in the X direction. Therefore, as shown in the drawing, the light source element arrays 202a1 and 202a2 of the light source unit 210a and the light source element arrays 202b1 and 202b2 of the light source unit 210b are at different positions in both the X direction and the Y direction. The light source element array 202a1 and the light source element array 202a2 of the light source unit 210a are arranged with a pitch P1, and the light source element array 202b1 and the light source element array 202b2 of the light source unit 210b are arranged with a pitch P2. Here, the pitches P1 and P2 are distances between the centers of the collimating lenses of the light source elements 202m included in adjacent light source element arrays. In the present embodiment, for example, the light source units 210a and 210b can be configured with substantially equal pitches P1 and P2.

On the irradiation side of the light source device 210, the prism element 211a and the prism element 211b extending across the light source units 210a and 210b are arranged in parallel to each other and respectively facing the light source element arrays 202a1 and 202a2. Furthermore, in the present embodiment, the prism elements 211a and 211b are arranged at positions overlapping each other as viewed in the Y direction.

In the present specification, the term "overlapping" means that at least a portion thereof has substantially the same coordinate positions in a certain direction. It should be understood that, in the present specification, the term "overlapping" includes not only a state in which objects completely overlap each other but also a state in which the objects partially overlap each other.

In the present embodiment, the prism elements 211a and 211b can be configured to have substantially the same shape and dimension, and have a rectangular shape in the X-Y plan view shown in part (b) of Fig. 5 and a substantially parallelogram shape in the X-Z view shown in part (c) of Fig. 5. Furthermore, as shown in part (c) of Fig. 5, the prism elements 211a and 211b have prism surfaces 212 and 213. The emitted light of the light source unit 210a is incident on the prism surface 212. The prism surface 213 is the opposing surface of the prism surface 212 and serves as a light exit surface. An antireflection coating corresponding to a wavelength region of the emitted light of the light source unit 210a can be applied to the prism surfaces 212 and 213.

As conceptually shown in part (c) of Fig. 5, in the prism elements 211a and 211b, a portion 212a of the prism surface 212 between the light source unit 210a and the light source unit 210b and an end portion 212b on the light source unit 210a side can abut on the surfaces 314 and 315 of the support member 311. Since the light emitted from the light source unit 210a does not pass through the portion 212a and the end portion 212b of the prism surface 212, the support member 311 can support the prism elements without affecting the output of the light source device.

As shown in Fig. 6, in the present embodiment, the prism element 211a and the prism element 211b have prism surfaces 211a1 and 211a2 and prism surfaces 211b1 and 211b2 extending in parallel along the X direction, respectively. As shown in the drawing, the prism elements 211a and 211b disposed to face the light source element arrays 202a1 and 202a2 are arranged alternately with the light source element arrays 202b1 and 202b2 as viewed in the X direction. Preferably, the width W between the prism surfaces 211a1 and 211a2 and between the prism surfaces 211b1 and 211b2 is configured to be maximized without blocking the light emitted from the light source element arrays 202b1 and 202b2.

The light source unit 210a and the light source unit 210b may have substantially the same dimensional configuration, or may have different dimensional configurations. In the present embodiment, the light source element arrays 202a1 and 202a2 of the light source unit 210a are arranged such that an interval between adjacent side ends is a separation distance d, and a light source element 202m1 included in the light source element arrays 202a1 and 202a2 each has a condenser lens having a uniform lens width m in the Y direction. In addition, the light source unit 210b has substantially the same dimensional configuration as the light source unit 210a, that is, the light source element arrays 202b1 and 202b2 are arranged at the separation distance d, and a light source element 202m2 has a condenser lens having a uniform lens width m in the Y direction.

Desirably, the width W of the prism elements 211a and 211b is substantially equal to the separation distance of the light source element arrays 202b1 and 202b2, and, in the present embodiment, is substantially equal to the separation distance d of the light source element arrays of the light source unit 210a and light source unit 210b. The lens width m of the condenser lens of light source element 202m1, and the lens width m of the condenser lenses of the light source element 202m1 and the light source element 202m2 in the present embodiment are substantially equal to the widths W of the prism elements 211a and 211b. As a result, a gap between the light emitted from the light source element arrays 202a1 and 202a2 and the light emitted from the light source element arrays 202b1 and 202b2 can be minimized, and the irradiation light of the light source device 210 can be collected with high density.

It should be note that, in the present specification, "substantially equal" is not only a completely identical value but also an actual value in consideration of tolerance in processing. For example, an error within a range of ±10% may be included, and preferably, for example, an error within a range of ±5% may be included.

### (Optical Path and Arrangement of Emitted Light of Light Source Device)

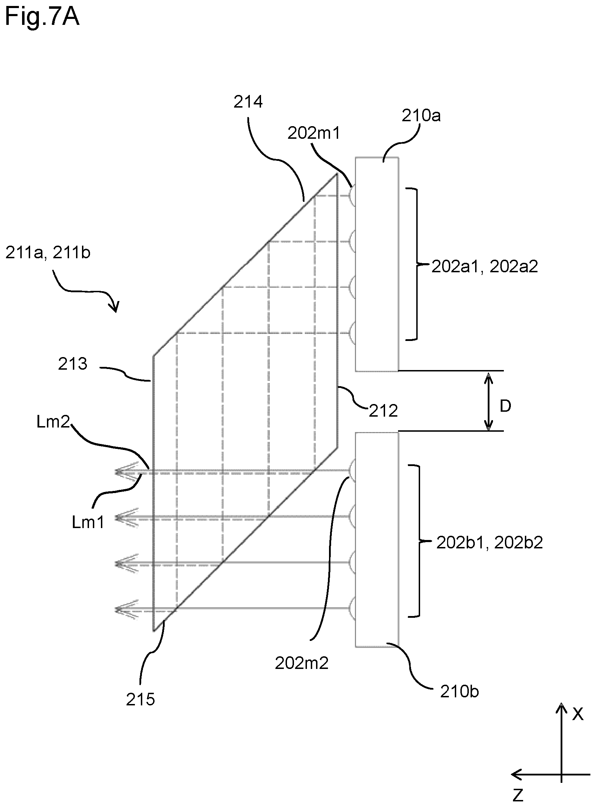

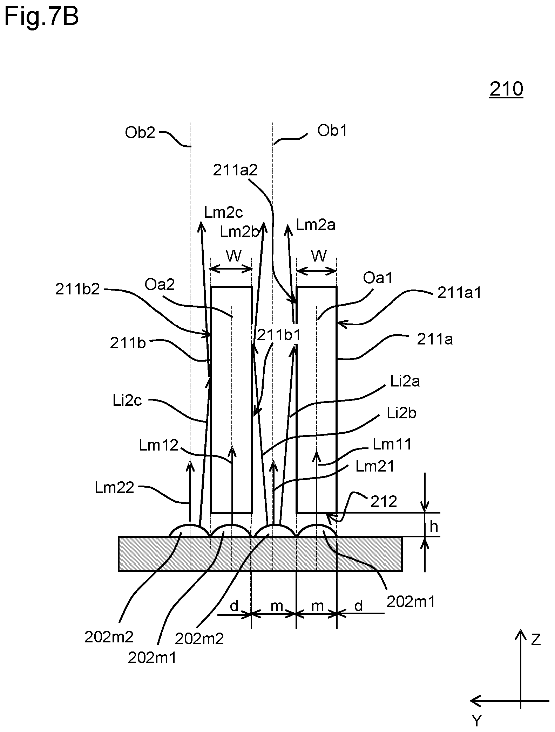

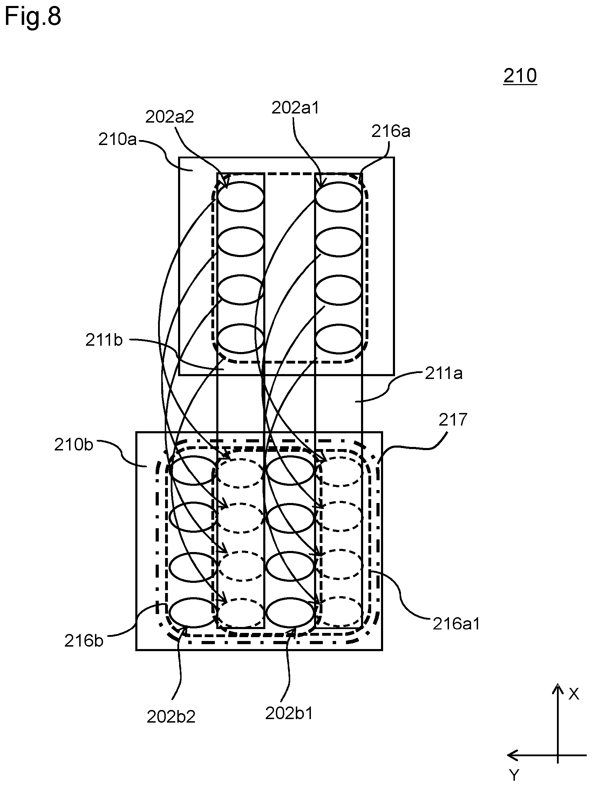

In the present embodiment, the prism elements 211a and 211b are used as a light guide optical system for the light emitted from the light source unit 210a. The optical path of the emitted light and the arrangement of the emitted light in the light source device according to the present embodiment will be described with reference to Figs. 7A to 8. Fig. 7A is a side view of an X-Z plane illustrating an optical path of emitted light of the light source device 210 of the first embodiment. Fig. 7B is a side view of the Y-Z plane illustrating the optical path of the emitted light of the light source device 210 of the first embodiment. Fig. 8 is a top view illustrating arrangement of the emitted light of the light source device 210 of the first embodiment.

In the X-Z plane shown in Fig. 7A, light emitted from a light source element 202m1 of the light source element arrays 202a1 and 202a2 of the light source unit 210a is incident along the parallel optical axis (not illustrated) on the prism surface 212 of the prism elements 211a and 211b on the irradiation side of the light source device. The incident light travels in the prism element and reaches a prism surface 214. Since an optical glass configuring the prism elements 211a and 211b has a high refractive index with respect to the external air, the prism surface 214 can be configured to enable total reflection of the incident light. The totally reflected light is guided toward the light source unit 210b in the prism elements 211a and 211b, and reaches a prism surface 215 on the opposing side parallel to the prism surface 214. After being further totally reflected by the prism surface 215, the light is emitted from the prism surface 213 as emitted light Lm1 in a direction parallel to an optical axis Oa.

On the other hand, light emitted from a light source element 202m2 of the light source element arrays 202b1 and 202b2 of the light source unit 210b is emitted along a parallel optical axis (not illustrated), without entering the prism elements 211a and 211b, and is emitted from the light source device as emitted light Lm2. In the light source device 210, the light source unit 210a and the light source unit 210b are arranged close to each other as much as possible, but two light source units are arranged in parallel such that adjacent side ends of the light source units are spaced apart from each other by a distance D due to restriction of a size, a shape, and the like. As shown in the drawing, via the prism elements 211a and 211b, at least a part of the plurality of light source elements 202m1 of the light source unit 210a can emit light from coordinate positions falling within a range of coordinate positions in the X direction from which the light of the plurality of light source elements 202m2 of the light source unit 210b is emitted. In other words, the emitted lights Lm1 and Lm2 of the light source units 210a and 210b are emitted from the light source device 210 so as to overlap each other as viewed in the Y direction. In Fig. 7A, the light source element 202m1 emits light from substantially the same coordinate positions in the X direction as the light source element 202m2, that is, the emitted lights Lm1 and Lm2 are emitted so as to substantially completely overlap each other as viewed in the Y direction, but the present disclosure is not limited thereto. It can also be configured that at least a part of the plurality of light source elements 202m1 emit light from coordinate positions falling within a range of coordinate positions in the X direction from which the light of the plurality of light source elements 202m2 is emitted, that is, the emitted lights Lm1 and Lm2 are emitted while partially overlapping each other as viewed in the Y direction.

In Fig. 7A, the prism surface 214 is illustrated to reflect the incident light in the X direction perpendicular to the incident direction (Z direction), but the present disclosure is not limited thereto. The prism surface 214 can also be configured to reflect incident light in other directions.

Next, in the Y-Z plane shown in Fig. 7B, preferably, the prism elements 211a and 211b are arranged such that the prism surfaces 211a1 and 211a2 and the prism surfaces 211b1 and 211b2 extend parallel to the optical axes Oa1 and Oa2 and the optical axes Ob2 and Ob1. The emitted lights Lm11 and Lm12 from the light source element 202m1 are incident on the prism surfaces 212 of the prism elements 211a and 211b along the parallel optical axes Oa1 and Oa2, propagated in the prism elements, and then emitted. On the other hand, emitted lights Lm22 and Lm21 from a light source element 202m2 of a light source unit 210ba are emitted along the parallel optical axes Ob2 and Ob1, without entering the prism elements 211a and 211b, and are emitted from the side of the prism surface 211b2. The lights Lm22 and Lm21 are emitted through a space between the opposing prism surface 211b1 and prism surface 211a2.

Preferably, the prism surface 212 of the prism elements 211a and 211b, on which the light emitted from the light source element 202m1 is incident, is disposed close to the condenser lens of the light source element 202m1. In the present embodiment, the prism elements 211a and 211b are disposed such that a distance h between the prism surface 212 and the condenser lens of the light source element 202m1 is not greater than three times a lens width m of the condenser lens in the Y direction. Accordingly, the prism surface 212 can receive the emitted light even in the presence of positional displacement or tilt caused by mounting errors of the prism elements 211a and 211b, or divergence or positional deviation of the emitted light beam caused by configuration errors of the light source.

In the present embodiment, the prism surfaces 211a1 and 211a2 and the prism surfaces 211b1 and 211b2 of the prism elements 211a and 211b can be configured by surfaces parallel to the emission optical axis of the light source elements 202m1 and 202m2. Preferably, the prism surfaces 211al and 211a2 and the prism surfaces 211b1 and 211b2 are configured by smooth surfaces parallel to the emission optical axis of the light source elements 202m1 and 202m2. In the present specification, the "smooth surface" means a smooth surface free from surface irregularities and being smooth, but also includes a surface having slight irregularities within manufacturing tolerances. For example, the prism surfaces 211a1 and 211a2 and the prism surfaces 211b1 and 211b2 may be configured to have an ordinary mirror-finish level. The term "ordinary mirror finish" refers to a smooth surface that causes little scattering due to surface irregularities and, for example, has a surface roughness that allows incident light to be substantially specularly reflected without substantial scattering. More specifically, for example, the mirror finish may have a surface roughness such that the arithmetic mean height Ra and/or the maximum height Rz, and/or the ten-point mean height RzJIS as defined by JIS standards is less than the wavelength of the incident light. By configuring the prism surfaces 211a1 and 211a2 and the prism surfaces 211b1 and 211b2 by smooth surfaces parallel to the emission optical axis of the light source element, for example, diffuse reflection of the light beams Li2a, Li2b, and Li2c, which are emitted from the light source element 202m2 and are incident on the prism surfaces 211a2, 211b1, and 211b2 at relatively large angles of incidence, can be suppressed at the prism surfaces 211a2, 211b1, and 211b2. As a result, the light beams Lm2a, Lm2b, and Lm2c reflected at reflection angles substantially equal to the incident angles can be emitted in the irradiation direction (Z direction) of the light source device, and the loss of the emitted light from the light source element 202m2 can be reduced.

As shown in Fig. 8, in the X-Y plane, the light source element arrays 202a1 and 202a2 of the light source unit 210a are arranged in an area 216a, and the light source element arrays 202b1 and 202b2 of the light source unit 210b are arranged in an area 216b. The light emitted from the light source element arrays 202a1 and 202a2 is guided from the area 216a toward the light source unit 210b by the prism elements 211a and 211b, and is emitted from the area 216a1 overlapping the area 216b of the light source element arrays 202b1 and 202b2 as viewed in the Y direction. As a result, the light source device 210 can emit the irradiation light from the light emitting area 217 in which the emitted lights of the light source units 210a and 210b are collected with high density, and can output the irradiation light with high luminance.

Furthermore, in the present embodiment, the prism elements 211a and 211b as the light guide optical system, are configured to totally reflect the incident light at the prism surfaces 214 and 215 (Fig. 7A), thereby making it possible to suppress a decrease in brightness due to scattering absorption during light reflection. Furthermore, the prism element can achieve highly accurate parallelism between the prism surfaces 214 and 215 in manufacturing, while eliminating the need for chamfering, thereby making it possible to avoid a dead area that may be generated when a reflective surface is configured by a mirror. As a result, the prism elements can be inserted between the light source element arrays 210b of the light source unit, and the emitted light of the light source element arrays 202a1 and 202a2 and the light source element arrays 202b1 and 202b2 can be collected with high density.

In addition, the present disclosure is not limited to a light guide optical system including prism elements. For example, the light guide optical system may include mirrors. The light source device 210 of the present embodiment can include, for example, a light guide optical system including the reflection surfaces 214 and 215 configured by mirrors instead of the prism elements 211a and 211b shown in Fig. 7A. In this case, the light emitted from the light source element 202m1 can be sequentially reflected by the reflection surfaces 214 and 215 and then emitted as the emitted light Lm1.

According to the first embodiment as described above, in the light source device including the plurality of light source units each including the light source element array in which the plurality of laser light source elements is arranged, the light emitted from each light source element array can be collected with high density, and the irradiation light with high luminance can be output.

### (Second Embodiment)

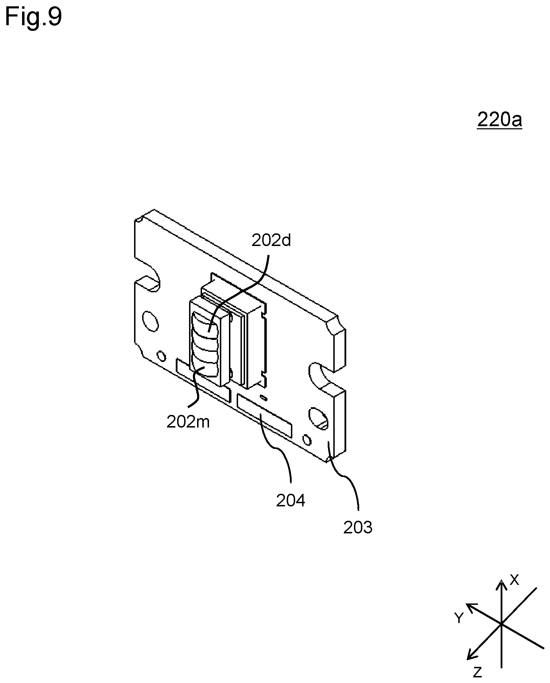

A configuration of a light source device according to a second embodiment will be described with reference to Figs. 9 to 12. The light source device according to the second embodiment is different from the first embodiment in that a light source unit included in the light source device is different. Therefore, the second embodiment will be described focusing on the different points. Components of the second embodiment substantially the same as the components of the first embodiment described above are denoted by the same reference numerals.

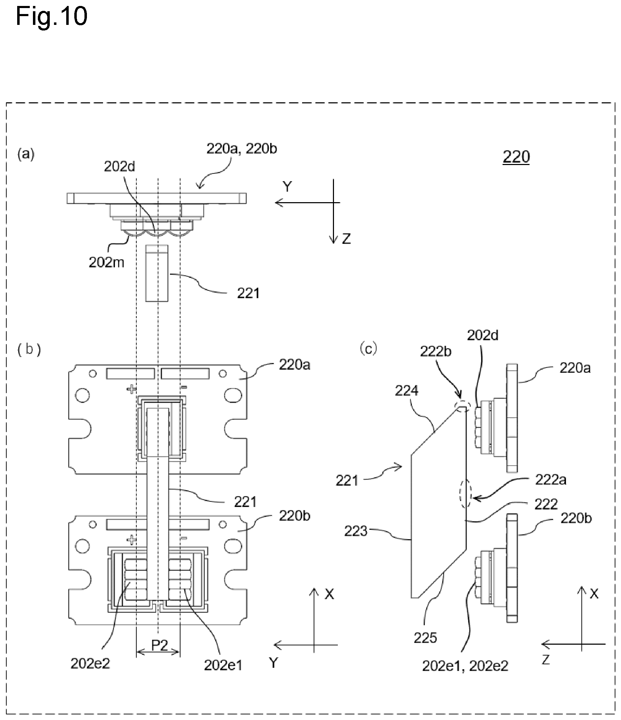

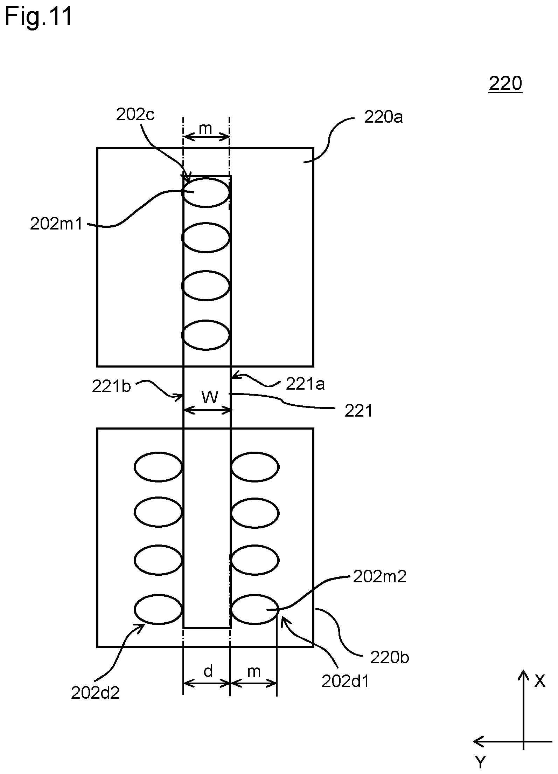

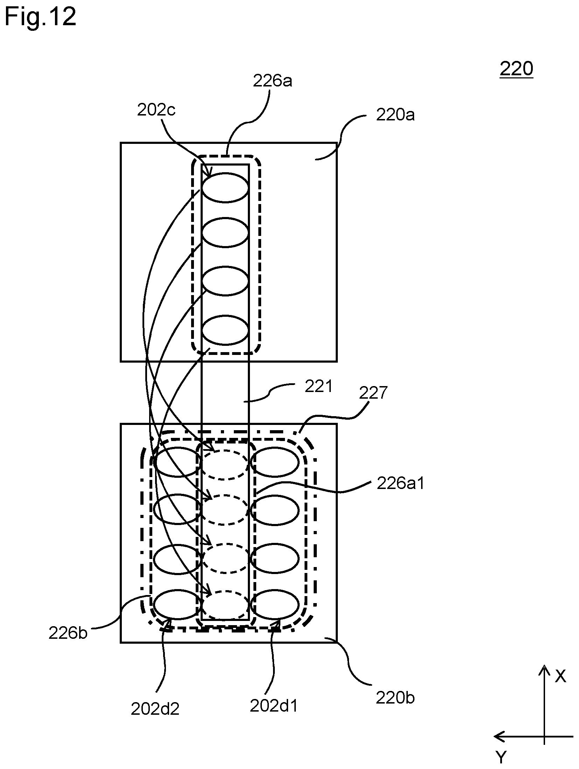

Fig. 9 is a perspective view of a light source unit 220a of the light source device according to the second embodiment. Fig. 10 is a plan view illustrating configurations of light source units 220a and 220b in the light source device 220 of the second embodiment. Fig. 11 is a top view illustrating arrangement of light source elements in the light source device 220 of the second embodiment. Fig. 12 is a top view illustrating arrangement of emitted light of the light source device 220 of the second embodiment.

As shown in Fig. 10, the light source device 220 of the second embodiment includes the light source units 220a and 220b, and a prism element 221 disposed on the irradiation side across the light source units 220a and 220b. In Fig. 10, the support member that supports the prism element 221 is omitted, but the light source device 220 can include a support member similar to the support member 311 of the light source device 210 described above. The prism element 221 has the same configuration as the prism elements 211a and 211b described above, and the light source unit 220b has the same configuration as the light source units 210a and 210b described above. As shown in Fig. 9, the light source unit 220a is different from the light source unit 210a shown in Fig. 4 in that the light source unit 220a includes one light source element array 202.

The light source unit 220a includes the light source element array 202 arranged along the X direction, the substrate 203, and the electrode 204. A light source element array 202c is configured by arranging a plurality of light source elements 202m that emit laser light along optical axes parallel to each other in an array. In the case of the present embodiment, the light source unit 220a includes the light source element array 202c arranged by four light source elements 202m, but the present disclosure is not limited thereto. The light source element array configuring the light source unit 220a may include an arbitrary number of light source elements.

The light source elements 202m each include, for example, a semiconductor laser element and a collimating lens that makes laser light from the semiconductor laser element substantially parallel light, and are mounted so as to emit laser light substantially parallel to each other. The light source element arrays 202a1 and 202a2 are disposed on the substrate 203 having excellent thermal conductivity, and are supplied with power by the electrode 204 connected to a power supply.

As shown in Fig. 10, the light source units 220a and 220b are arranged with their substrates lying substantially on the same plane, and are spaced away from each other in the X direction. The light source element array 202c of the light source unit 220a is disposed between light source element arrays 202d1 and 202d2 of the light source unit 220b as viewed in the X direction. Therefore, as shown in the drawing, the light source element array 202c of the light source unit 220a and the light source element arrays 202d1 and 202d2 of the light source unit 220b are at different positions in both the X direction and the Y direction. The light source element array 202d1 and the light source element array 202d2 of the light source unit 220b can be arranged with the pitch P2. Here, the pitch P2 is a distance between the centers of the collimating lenses of the light source elements 202m included in adjacent light source element arrays.

As shown in Fig. 11, in the present embodiment, the prism element 221 has prism surfaces 221a and 221b extending in parallel along the X direction. As shown in the drawing, the prism element 221 disposed opposite to the light source element array 202c is located on a plane between the light source element array 202d1 and the light source element array 202d2. Preferably, the width W between the prism surfaces 221a and 221b is configured to be maximized without blocking the light emitted from the light source element arrays 202d1 and 202d2.

In the present embodiment, the light source element arrays 202d1 and 202d2 of the light source unit 220b are arranged such that an interval between adjacent side ends is a separation distance d. The light source element 202m1 included in the light source element array 202c and the light source element 202m2 included in the light source element arrays 202d1 and 202d2 have condenser lens having a uniform lens width m in the Y direction.

Preferably, the width W of the prism element 221 is substantially equal to the separation distance d of the light source element arrays 202d1 and 202d2. In addition, the lens width m of the condenser lens of the light source elements 202m1 and 202m2 is substantially equal to the width W of the prism element 221. As a result, the gap between the light emitted from the light source element array 202c and the light emitted from the light source element arrays 202d1 and 202d2 can be minimized, and the irradiation light of the light source device 220 can be collected with high density.

On the irradiation side of the light source device 220, the prism element 221 extending across the light source units 220a and 220b is disposed opposite to the light source element array 202c of the light source unit 220a, and is used as a light guide optical system for the emitted light of the light source unit 220a. The emitted light of the light source unit 220a enters the prism element 221, is guided toward the light source unit 220b in the prism element 221, and then is emitted. On the other hand, the light emitted from the light source unit 220b can be emitted without passing through the prism element 221. Since the optical paths of the emitted lights of the light source units 220a and 220b are similar to the optical paths shown in Figs. 7A and 7B, detailed description thereof will be omitted here.

As shown in Fig. 12, in the X-Y plane, the light source element array 202c of the light source unit 220a is arranged in an area 226a, and the light source element arrays 202d1 and 202d2 of the light source unit 220b are arranged in an area 226b. The light emitted from the light source element array 202c is guided from the area 226a to the area 226b by the prism element 221, and is emitted from an area 226a1 overlapping the area 226b of the light source element arrays 202d1 and 202d2 as viewed in the Y direction. Via the prism element 221, at least a part of the plurality of light source elements of light source unit 220a can emit the light from coordinate positions falling within the range of the coordinate positions in the X direction from which the light of the plurality of light source elements of the light source unit 220b is emitted. In other words, the emitted lights of the light source units 220a and 220b are emitted from the light source device 220 so as to overlap each other as viewed in the Y direction. Here, "emitted so as to overlap" may mean that the lights are emitted so as to substantially completely overlap each other, or may mean that the lights are emitted so as to partially overlap each other. As a result, the light source device 220 can emit irradiation light from a light emitting area 227 in which the emitted lights of the light source units 220a and 220b are collected with high density, and can output the irradiation light with high luminance. As described above, in the present embodiment, the prism elements 221 can be inserted between the rows of light source element arrays 220b of the light source unit, and the emitted light of the light source element arrays 202c and the light source element arrays 202d1 and 202d2 can be collected with high density.

The light source device 220 of the present embodiment can include, for example, light guide optical system including reflection surfaces 224 and 225 configured by mirrors instead of the prism element 221 shown in Fig. 10.

According to the second embodiment as described above, in the light source device including the plurality of light source units each including the light source element array in which the plurality of laser light source elements is arranged, the emitted light from each light source element array can be collected with high density, and the irradiation light with high luminance can be output.

### (Third Embodiment)

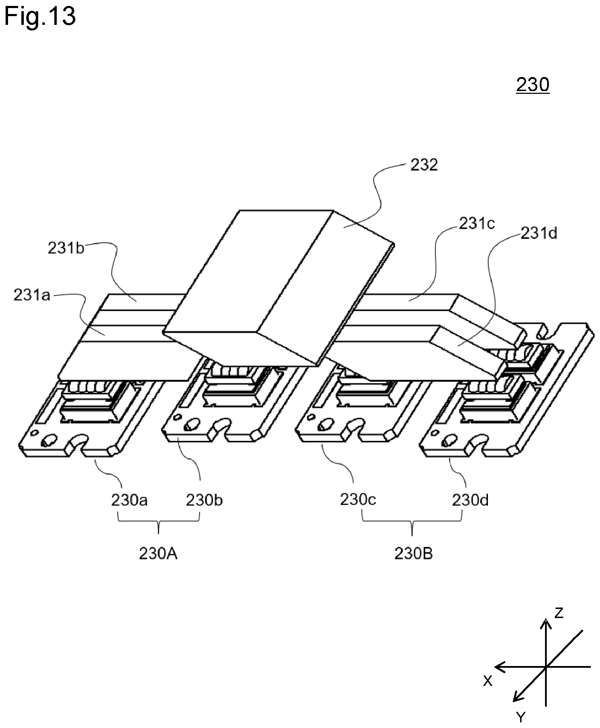

A configuration of a light source module according to a third embodiment will be described with reference to Figs. 13 to 16. The light source module according to the third embodiment includes a light source device unit configured by the light source device according to the first embodiment or the second embodiment described above. Components that are substantially the same as the components of the first or second embodiment described above are denoted by the same reference numerals, and detailed description thereof will be omitted.

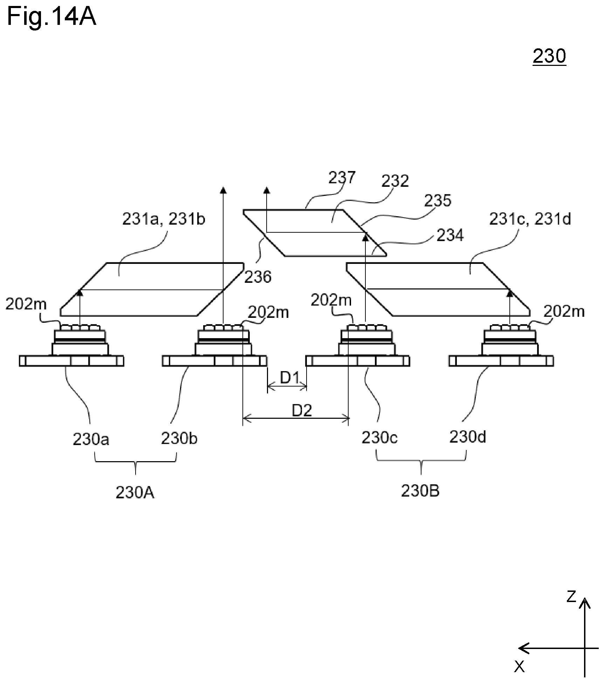

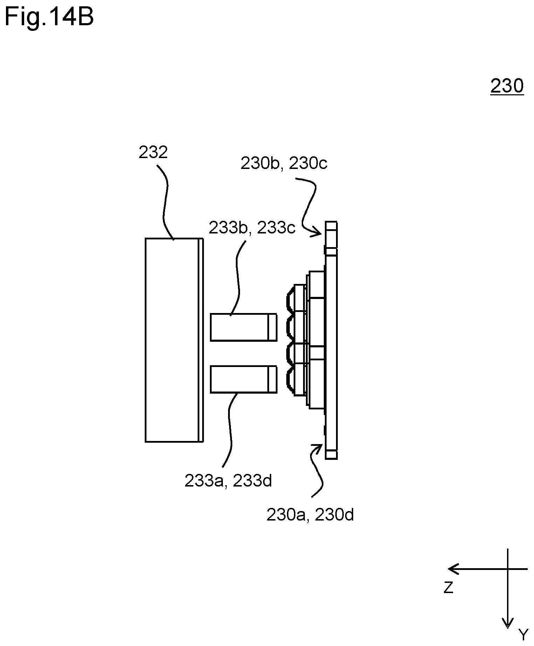

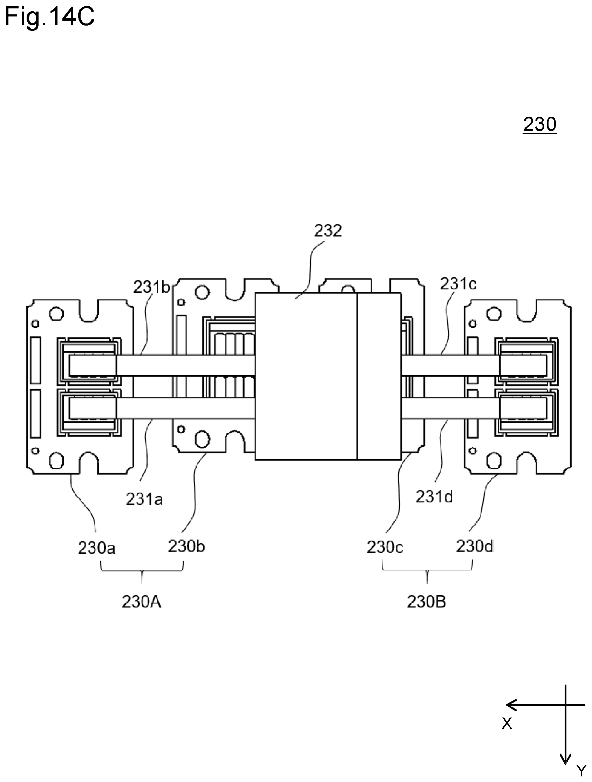

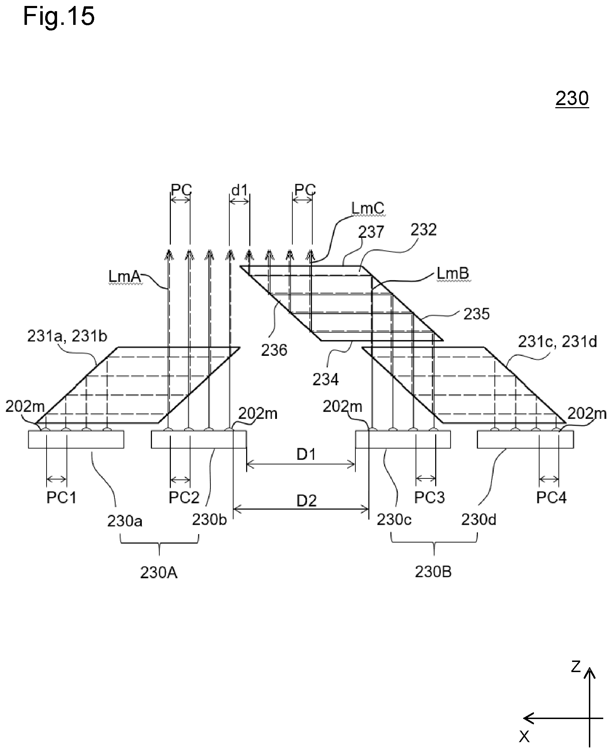

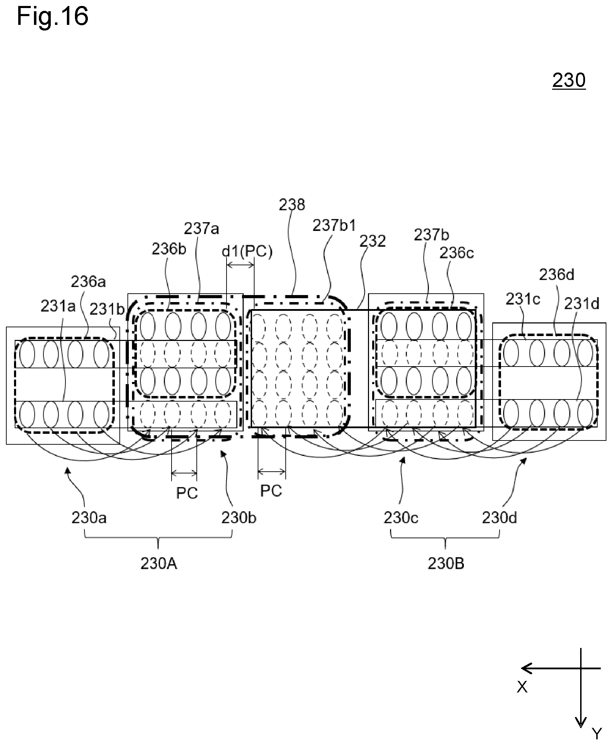

Fig. 13 is a perspective view of a light source module 230 of the third embodiment. Fig. 14A is a side view of the light source module 230 of the third embodiment, and is a view illustrating a configuration in an X-Z plane. Fig. 14B is another side view of the light source module 230 of the third embodiment, and is a view illustrating a configuration in a Y-Z plane. Fig. 14C is a top view of the light source module 230 of the third embodiment. Fig. 15 is a side view illustrating an optical path of emitted light of the light source module 230 of the third embodiment. Fig. 16 is a top view illustrating arrangement of emitted light of the light source module 230 of the third embodiment.

As shown in Fig. 13, the light source module 230 of the present embodiment includes light source device units 230A and 230B and a prism 232. The light source device unit 230A includes light source units 230a and 230b and prism elements 231a and 231b extending across the light source units 230a and 230b. The light source device unit 230B includes light source units 230c and 230d and prism elements 231c and 231d extending across the light source units 230c and 230d. The prism 232 is disposed on the irradiation side of the light source module 230 and extends across the light source device units 230A and 230B.

Each of the light source device units 230A and 230B can have a configuration similar to that of the light source device 210 according to the first embodiment described above or the light source device 220 according to the second embodiment described above. In Figs. 13 to 14C, the light source device units 230A and 230B are illustrated to have the same configuration as the light source device 210 according to the first embodiment, but the present disclosure is not limited thereto. One or both of the light source device units 230A and 230B can be configured similarly to the light source device 220 according to the second embodiment.

As shown in Figs. 14A to 14C, although the light source device units 230A and 230B are arranged as close as possible, the adjacent side ends are arranged to be separated from each other by an interval D1 due to restrictions on the size, the shape, and the like. Although not limited to this, in the present embodiment, each light source unit of the light source device units 230A and 230B can be configured to include by a similar light source element 202m. As shown in the drawing, the light source element 202m at the rightmost end of the light source unit 230b and the light source element 202m at the leftmost end of the light source unit 230c are separated from each other by a distance D2. The prism 232 disposed on the irradiation side has a substantially parallelogram shape in the X-Z plan view, extends across the light source device units 230A and 230B in the X direction, and has a width covering the light source unit 230c and the prism elements 231c and 231d in the Y direction.

As shown in Fig. 15, the emitted light of the light source units 230a and 230b of the light source device unit 230A is densely collected via the prism elements 231a and 231b, and is emitted as emitted light LmA without passing through the prism 232. The emitted lights of the light source units 230c and 230d of the light source device unit 230B are densely collected by the prism elements 231c and 231d, and then are incident on the prism surface 234 of the prism 232 as emitted light LmB.

In the present embodiment, the prism 232 is used as a light guide optical system of the emitted light of light source device unit 230B. Light emitted from the light source device unit 230B is incident on the prism 232, reflected by the prism surface 234, propagates in the prism 232, and reaches the prism surface 235. Since the optical glass configurating the prism 232 has a high refractive index with respect to the external air, the prism surface 235 can be configured to enable total reflection of the incident light. The totally reflected light is guided toward the light source device unit 230A in the prism 232, and reaches a prism surface 236 on the opposing side parallel to the prism surface 235. After being further totally reflected by the prism surface 236, the light is emitted from a prism surface 237 as emitted light LmC. Antireflection coating corresponding to the wavelength range of the emitted light of the light source device unit 230B can be applied to the prism surfaces 234 and 237.

On the other hand, as shown in Fig. 15, the light emitted from the light source device unit 230A can be emitted without passing through the prism 232. In the present embodiment, in the light source units 230a, 230b, 230c, and 230d, the light source elements 202m can be arranged at pitches PC1, PC2, PC3, PC4 in the X direction in the drawing. Although not limited thereto, in the present embodiment, the PC1, the PC2, the PC3, and the PC4 can be configured with equal values PC. The light beam of the emitted light LmA of the light source device unit 230A can be emitted along the optical axes parallel to each other with a pitch PC in the X direction.

The light beam of the emitted light LmB of the light source device unit 230B is incident on the prism 232 with the pitch PC in the X direction, is guided toward the light source device unit 230A by the prism 232, and then is emitted. The light beam of the emitted light LmC is emitted along the optical axes parallel to each other with the pitch PC in the X direction. The leftmost light beam of the emitted light LmC can be emitted at a distance d1 from the rightmost light flux of the emitted light LmA. The interval d1 is smaller than the interval D1 between the light source device units 230A and 230B, for example, but not limited thereto, can have a value equal to the pitch PC. As described above, in the light source module 230 of the present embodiment, the emitted lights LmA and LmC of the light source device units 230A and 230B can be emitted while reducing the interval to the interval d1 smaller than the interval D1 between the light source device units 230A and 230B.

As shown in Fig. 16, in the X-Y plane, the light source element array of the light source unit 230a is arranged in an area 236a, and the light source element array of the light source unit 230b is arranged in an area 236b. Via the prism elements 231a and 231b, the light source device unit 230A emits irradiation light from a light emitting area 237a in which the emitted lights of the light source units 236a and 220b are collected. The light source element array of the light source unit 230c is arranged in the area 236c, and the light source element array of the light source unit 230d is arranged in the area 236d. Via the prism elements 231c and 231c, the light source device unit 230B emits irradiation light from a light emitting area 237b in which the emitted lights of the light source units 236c and 220d are collected. Further, the irradiation light from the light source device unit 230B is guided from the area 237b toward the light source unit 230A by the prism 232, and the irradiation light can be emitted from a light emitting area 237b1 close to the light emitting area 237a of the light source device unit 230A in the X direction. As a result, the light source module 230 can emit the irradiation light from a light emitting area 238 in which the irradiation lights of the light source device units 230A and 230B are collected with high density, and can output the irradiation light with high luminance.

The light source module 230 of the present embodiment can include, for example, a light guide optical system including the reflection surfaces 235 and 236 configured by mirrors instead of the prism 232 shown in Fig. 15.

According to the third embodiment as described above, in the light source module including the plurality of light source units each including the light source element array in which the plurality of laser light source elements is arranged, the emitted light from each light source element array can be collected with high density, and the irradiation light with high luminance can be output.

### (Fourth Embodiment)

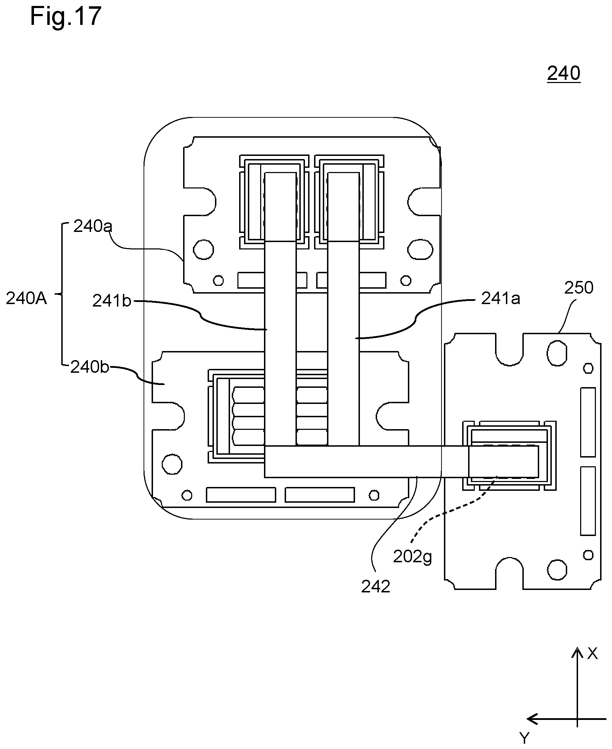

The configuration in which the light emitted from the light source element array is collected with high density according to the present disclosure can be applied without being limited to the arrangement of the light source unit including the light source element array. In this regard, a configuration of a light source assembly according to a fourth embodiment will be described with reference to Figs. 17 to 19. The light source assembly according to the fourth embodiment includes the light source device according to the first or second embodiment described above, and further includes a light source unit having light source element arrays in different orientations. Components that are substantially the same as the components of the first or second embodiment described above are denoted by the same reference numerals, and detailed description thereof will be omitted.

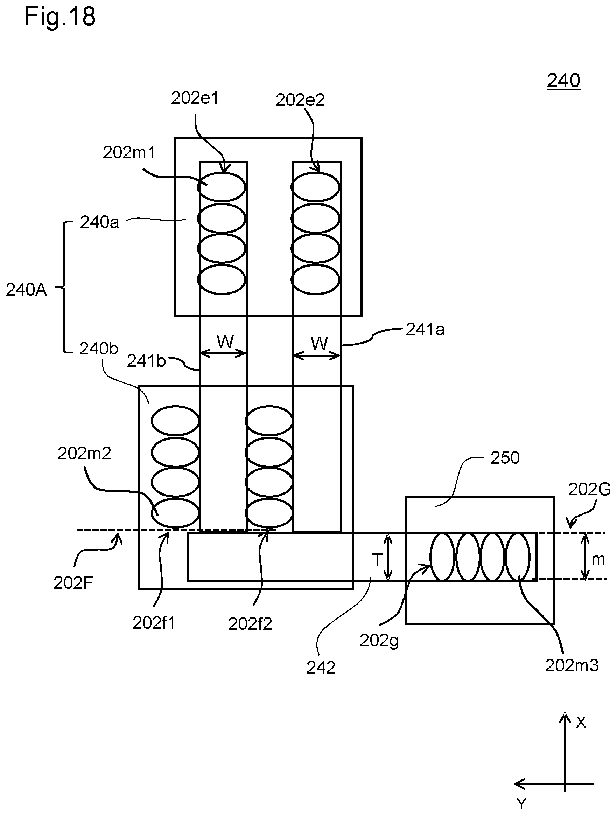

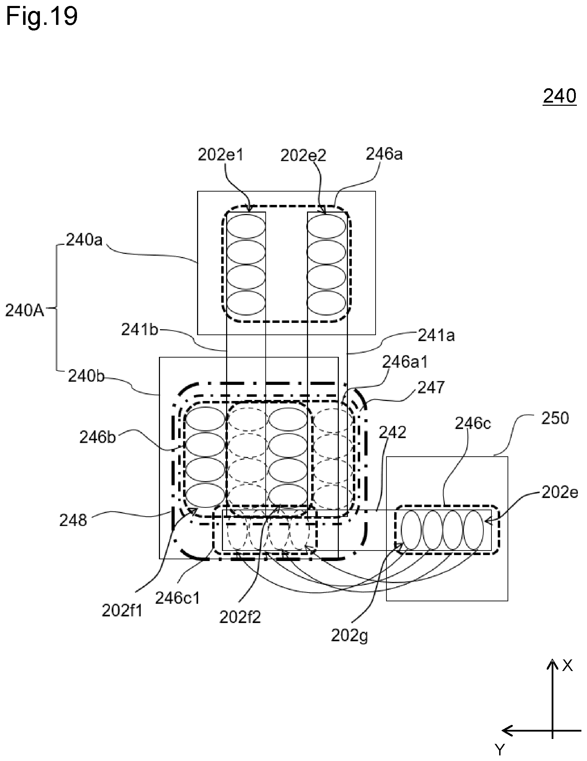

Fig. 17 is a top view of a light source assembly 240 of the fourth embodiment. Fig. 18 is a top view illustrating arrangement of light source elements in the light source assembly 240 of the fourth embodiment. Fig. 19 is a top view illustrating arrangement of emitted light of the light source assembly 240 of the fourth embodiment.

As shown in Fig. 17, the light source assembly 240 of the present embodiment includes a light source device unit 240A, a light source unit 250, and a prism 242. The light source device unit 240A includes light source units 240a and 240b and prism elements 241a and 241b extending across the light source units 240a and 240b. The light source unit 250 includes a light source element array 202g arranged along the Y direction. The prism 242 is disposed on the irradiation side of the light source assembly 240 and extends across the light source device unit 240A and the light source unit 250.

In Figs. 17 to 19, the light source device unit 240A is illustrated to have the same configuration as the light source device 210 according to the first embodiment described above, but the present disclosure is not limited thereto. The light source device unit 240A can have the same configuration as the light source device 210 according to the first embodiment or the light source device 220 according to the second embodiment. In addition, the light source unit 250 is illustrated to have the same configuration as the light source unit 220a according to the above-described second embodiment, but the present disclosure is not limited thereto. For example, the light source unit 250 has the same configuration as the light source units 210a and 210b of the first embodiment, and may include a plurality of light source element arrays.

As shown in Fig. 18, the light source element array 202g of the light source unit 250 is spaced away from the light source element arrays 202f1 and 202f2 of the light source unit 240b as viewed in the X direction, and arranged so as not to cross the light source element arrays 202f1 and 202f2 as viewed in the Y direction. In the present embodiment, for example, as shown in the drawing, an upper end 202G of the light source element array 202g and a lower end 202F of the light source element arrays 202f1 and 202f2 can be arranged to be close to each other and substantially adjacent to each other as viewed in the Y direction. Although not limited to this, in the present embodiment, the light source element array 202g can include a light source element 202m3 similar to the light source elements 202m1 and 202m2 of the light source units 210a and 210b of the light source device unit 240A. The light source element 202m3 is disposed in a different direction from the light source elements 202m1 and 202m2, and may include a collimating lens having a lens width m in the X direction.

In the present embodiment, the prism 242 is used as a light guide optical system for the emitted light of the light source unit 250. The prism 242 is disposed opposite the light source element array 202g of the light source unit 250. A width T in the X direction of the prism 242 may be the same as or different from the width W in the Y direction of the prism elements 241a and 241b of the light source device unit 240A. In the present embodiment, the width T of the prism 242 is substantially equal to the lens width m of the collimating lens of the light source element 202m3. As a result, the gap between the light emitted from the light source element array 202g and the light emitted from the light source element arrays 202f1 and 202f2 can be minimized, and the irradiation light of the light source assembly 240 can be collected with high density. When the light source unit 250 includes a plurality of light source element arrays, the prism 242 may be configured to include a plurality of prisms respectively disposed opposite corresponding ones of the light source element arrays of the light source unit 250, or by a single prism having a width covering the plurality of light source element arrays.

The prism 242 can be configured similarly to the prism elements 241a and 241b. The light emitted from the light source element array 202g of the light source unit 250 enters the prism 242, is guided toward the light source device unit 240A by the prism 242, and can be emitted from the light source assembly 240 so as to overlap with the irradiation light from the light source device unit 240A as viewed in the X direction. The light emitted from the light source device unit 240A is emitted without passing through the prism 242.

As shown in Fig. 19, in the X-Y plane, the light source element arrays 202e1 and 202e2 of the light source unit 240a are arranged in an area 246a, and the light source element arrays 202f1 and 202f2 of the light source unit 240b are arranged in an area 246b. Via the prism elements 241a and 241b, the light source device unit 240A emits irradiation light from a light emitting area 247 at which irradiation light is collected. The light source element array 202g of the light source unit 250 is arranged in an area 246c. The light emitted from the light source element array 202g is guided from the area 246c to the vicinity of the area 247 by the prism 242 as shown in the drawing, and can be emitted from a light emitting area 246c1 overlapping the light emitting area 247 of the light source device unit 240A as viewed in the X direction. Via the prism 242, at least a part of the plurality of light source elements of the light source unit 250 can emit light from coordinate positions falling within a range of coordinate positions in the X direction from which the light of the plurality of light source elements of the light source device unit 240A is emitted. In other words, the emitted lights of the light source unit 250 and the light source device unit 240A are emitted from the light source assembly 240 so as to overlap each other as viewed in the X direction. Here, "emitted so as to overlap" may mean that the lights are emitted so as to substantially completely overlap each other, or may mean that the lights are emitted so as to partially overlap each other. As a result, the light source assembly 240 can emit the irradiation light from a light emitting area 248 in which the emitted lights of the light source device unit 240A and the light source unit 250 are collected with high density, and can output the irradiation light with high luminance. Since the arrangement directions of the light source elements included in the light source units 240a and 240b and the light source unit 250 are different, the irradiation light emitted from the light emitting area 248 can include light having different polarization directions.

Light source assembly 240 of the present embodiment can include, for example, a light guide optical system including reflection surfaces configured by mirrors instead of the prism 242. The light guide optical system reflects the light emitted from the light source element array 202g of the light source unit 250 on the reflection surface to guide the light toward the light source device unit 240A, and can emit the light from the light source assembly 240 so as to overlap with the irradiation light from the light source device unit 240A as viewed in the X direction.

According to the fourth embodiment as described above, in the light source assembly including the plurality of light source units each including the light source element array in which the plurality of laser light source elements is arranged, the emitted light from each light source element array can be collected with high density, and the irradiation light with high luminance can be output.

Although the light source assembly 240 of the fourth embodiment is described to be configured by the light source device unit 240A and the light source unit 250, the present disclosure is not limited thereto. For example, instead of the light source unit 250, the light source assembly 240 of the fourth embodiment may include two light source device units having the same configuration as the light source device unit 240A and having different arrangement directions of the light source elements. In this case, a prism having a configuration similar to that of the prism 232 described above may be disposed as the light guide optical system extending across the two light source device units. Alternatively, a light guide optical system including reflection surfaces configured by mirrors may be disposed as the light guide optical system extending across the two light source device units.

In the above-described embodiment, the configuration in which the light source unit includes one or two light source element arrays has been described just as one example, but the present disclosure is not limited thereto. The light source unit may include, for example, three or more light source element arrays, and the light source device may include light guide optical systems corresponding to each light source element array.

Furthermore, in the projection-type image display device described above, the light source device that emits red light and the light source device that emits green light have been described to include two light source units. However, in a case where the output of the illumination light of the entire device is required, the light source device that emits blue light can also be configured to include a plurality of light source units each including a light source element array in which a plurality of light source elements is arranged.

As described above, the above-described embodiment has been described as an example of the technique in the present disclosure. For this purpose, the drawings and the detailed description are provided. Therefore, the components described in the drawings and the detailed description may include not only components essential for solving the problem but also components that are not essential for solving the problem in order to describe the above-described technology. Therefore, it should not be immediately recognized that these non-essential components are essential based on the fact that these non-essential components are described in the drawings and the detailed description.

Further, the above-described embodiments are provided to describe the technique in the present disclosure, and hence it is possible to make various changes, replacements, additions, omissions, and the like within the scope of claims or the equivalent thereof.

The present disclosure is applicable to an illumination device used in a projection type image display device.

| | | | |
|---|---|---|---|
| 101 | rodintegrator | 102, 103 | relay lenses |
| 104, 208 | mirror | | |
| 105 | field lens | | |
| 106 | total reflection prism unit | | |
| 107, 108 | prism | | |
| 111 | colorprism unit | | |
| 113, 115, | prism | | |
| 117R, 117G, 117B | DMDs (Digital Micromirror Devices) | | |
| 118 | projection optical system | | |
| 200 | illumination device | | |
| 202m, 202m1, 202m2, 202m3 | light source element | | |
| 203 | substrate | | |
| 204 | electrode | | |
| 205, 206 | dichroic mirror | | |
| 207, 209 | condenser lens | | |
| 210R, 210G, 210B | light source device | | |
| 210, 220 | light source device | | |
| 230 | light source module | | |
| 240 | light source assembly | | |
| 210a, 210b, 220a, 220b | light source unit | | |
| 230a, 230b, 230c, 230d | light source unit | | |
| 240a, 240b, 250 | light source unit | | |
| 230A, 230B, 240A | light source device, light source device unit | | |
| 202a1, 202a2, 202b1, 202b2 | light source element array | | |
| 211a, 211b, | prism element | | |
| 232, 242 | prism | | |
| 212, 213, 214, 215 | prism surface | | |
| 311 | support member | | |
| W, T | prism width | | |
| m | lens width | | |

## Claims

1. A light source device comprising:
a first light source unit including a first light source element array formed by a plurality of light source elements arranged in a first direction and configured to emit first laser light;
a second light source unit including a second light source element array formed by a plurality of light source elements arranged in the first direction, spaced apart from the first light source unit in the first direction, and configured to emit second laser light; and
a light guide optical system disposed opposite the first light source element array and extending across the first light source unit and the second light source unit, wherein
the second light source unit includes at least two second light source element arrays spaced apart from each other in a second direction orthogonal to the first direction,
the first light source element array is arranged between two adjacent ones of the second light source element arrays as viewed in the first direction,
the first laser light and the second laser light are emitted in a third direction substantially orthogonal to the first direction and the second direction, and
the light guide optical system includes:
a first reflection surface configured to reflect the incident first laser light toward the second light source unit in the first direction; and
a second reflection surface parallel to the first reflection surface, the second reflection surface being configured to further reflect the first laser light reflected by the first reflection surface and emit the first laser light such that the first laser light overlaps the second laser light as viewed in the second direction.

2. The light source device according to claim 1, wherein
the light guide optical system includes a prism element, and
the prism element includes:
a first prism surface on which the first laser light is incident;
a second prism surface that is the first reflection surface; and
a third prism surface that is the second reflection surface.

3. The light source device according to claim 2, wherein
the first light source unit includes:
at least two of the first light source element arrays spaced apart from each other in the second direction; and
at least two of the prism elements each disposed opposite a respective one of the first light source element arrays and extending across the first light source unit and the second light source unit, wherein
the first light source element array and the second light source element array are arranged alternately as viewed in the first direction,
each of the prism elements has a pair of fourth prism surfaces extending along the first direction and being parallel to the third direction, and
the second laser light is emitted through a space between mutually facing fourth prism surfaces of adjacent prism elements.

4. The light source device according to claim 3, wherein a width between the pair of fourth prism surfaces of each of the prism elements is substantially equal to a distance between adjacent side ends of adjacent second light source element arrays.

5. The light source device according to claim 3 or 4, wherein
the light source elements of the first light source element array include a semiconductor laser element and a collimating lens provided for the semiconductor laser element, and
the collimating lens has a lens width substantially equal to a width between the pair of fourth prism surfaces in the second direction.

6. The light source device according to claim 5, wherein a distance between the first prism surface and the collimating lens is not greater than three times the lens width.

7. The light source device according to claim 2 or 3, further comprising a support member configured to support the prism element, wherein
the support member abuts on the first prism surface at a position between the first light source unit and the second light source unit.

8. A light source module comprising:
a first light source device according to claim 1 or 2, the first light source device being configured to emit first irradiation light;
a second light source device according to claim 1 or 2, the second light source device being configured to emit second irradiation light, the first light source device and the second light source device being spaced apart from each other by a first distance in the first direction; and
an additional light guide optical system extending across the first light source device and the second light source device, wherein
the additional light guide optical system includes:
a third reflection surface configured to reflect the incident second irradiation light toward the first light source device in the first direction; and
a fourth reflection surface parallel to the third reflection surface, the fourth reflection surface being configured to further reflect the second irradiation light reflected by the third reflection surface and emit the second irradiation light such that, in the first direction, the second irradiation light is spaced apart from the first irradiation light by a second distance smaller than the first distance.

9. The light source module according to claim 8, wherein
the additional light guide optical system includes a prism, and
the prism includes:
a fifth prism surface on which the second irradiation light is incident;
a sixth prism surface that is the third reflection surface; and
a seventh prism surface that is the fourth reflection surface.

10. A light source assembly comprising:
a first light source device according to claim 1 or 2, the first light source device being configured to emit first irradiation light;
a third light source unit including a third light source element array formed by a plurality of light source elements arranged in the second direction and configured to emit third laser light in the third direction; and
an additional light guide optical system disposed opposite the third light source element array and extending across the third light source unit and the first light source device, wherein
the third light source element array is spaced away from the second light source element array as viewed in the first direction, the third light source element array not intersecting the second light source element array as viewed in the second direction, and
the additional light guide optical system includes:
a fifth reflection surface configured to reflect the incident third laser light toward the first light source device in the second direction; and
a sixth reflection surface parallel to the fifth reflection surface, the sixth reflection surface being configured to further reflect the third laser light reflected by the fifth reflection surface and emit the third laser light such that the third laser light overlaps the first irradiation light as viewed in the first direction.

11. The light source assembly according to claim 10, wherein
the additional light guide optical system includes a prism, and
the prism includes:
an eighth prism surface on which the third laser light is incident;
a ninth prism surface that is the fifth reflection surface; and
a tenth prism surface that is the sixth reflection surface.

12. An illumination device comprising at least one of the light source devices according to claim 1 or 2.

13. A projection type image display device comprising:
the illumination device according to claim 12;
an image display element configured to modulate illumination light emitted from the illumination device and emit the modulated illumination light as projection light; and
a projection optical system configured to enlarge and project the projection light to display an image.
